Europäisches Patentamt

European Patent Office

Office européen des brevets

(19)

(11) Publication number: **0 332 099**
**A2**

(12) **EUROPEAN PATENT APPLICATION**

(21) Application number: **89103855.6**

(22) Date of filing: **06.03.89**

(51) Int. Cl.⁴ **G11B 19/28 , G11B 27/24**

(30) Priority: **07.03.88 JP 53146/88**

(43) Date of publication of application:
**13.09.89 Bulletin 89/37**

(84) Designated Contracting States:
**DE FR GB**

(71) Applicant: **NEC CORPORATION**
**33-1, Shiba 5-chome, Minato-ku**
**Tokyo 108(JP)**

(72) Inventor: **Uchikura, Hideaki c/o NEC**
**Corporation**
**33-1, Shiba 5-chome**
**Minato-ku Tokyo(JP)**

(74) Representative: **Vossius & Partner**
**Siebertstrasse 4 P.O. Box 86 07 67**
**D-8000 München 86(DE)**

(54) **Control circuit for spindle motor.**

(57) A control circuit for controlling according to external standard pulses a spindle motor used to rotate a recording disc medium pre-recorded thereon with clock data indicative of angular position thereof. A detecter operates during the rotation of recording disc medium for detecting the clock data and producing successively clock pulses in response to detection of the clock data. A comparator compares phase of the clock pulses with that of the external standard pulses inputted from a standard pulse source outside the control circuit to produce a phase error signal indicative of phase difference between the clock pulses and the standard pulses. A controller controls rotation speed of the spindle motor according to the phase error signal to thereby synchronize the clock pulses to the standard pulses.

FIG.1

## CONTROL CIRCUIT FOR SPINDLE MOTOR

### BACKGROUND OF THE INVENTION

The present invention relates to a spindle motor control circuit for controlling rotation speed of spindle motor utilized to rotate a recording disc medium of magnetic disc device etc.

In the conventional recording device of rotary type, a spindle motor for rotating a recording disc medium such as magnetic disc and a control circuit for controlling the spindle motor, are provided for each spindle and are controlled independently of and separately from other individual recording devices. However, since the above-described conventional recording device of rotary type individually has its spindle motor and control circuit thereof, it is difficult to drive a plurality of the recording devices in synchronization with each other.

On the other hand, in recent years, the magnetic disc devices and optical disc devices have become smaller in size and become greater in recording capacity, and their data transfer speed has also been improved. Further, these small disc devices can be synchronizingly driven in parallel to each other so as to constitute a single data filing device of medium or large recording capacity.

In view of the above-mentioned fact, there has been proposed synchronization system of multiple disc drives as desclosed in, for example, the United States Patent No. 3,893,178. The synchronization system is comprised of a plurality of rotating discs each having an index point utilized to assist in the location of specific locations radially about the discs. The system includes adjustable drive means for rotating the discs at desired rotational speeds, means to signal the arrival of each index point at a predetermined location on the drive, and circuit means to detect the relative position of the index points and regulate the speeds of the drive means to adjust the speed of rotation of the discs thereby to cause the index points to arrive at the respective predetermined locations concurrently. In one aspect, one drive means is the master and all other drive means are slaves, and the circuit means is adapted to regulate the speed of rotation of the slave drive means to cause the index points to arrive at the respective predetermined locations concurrently with the master drive means.

However, since all of the slave drive means are synchronized with the master drive means through feedback control, possible unstable driving state of the master drive means would directly affect the stable driving state of the slave drive means. For example, disturbance due to temporary bearing defect of the master drive means cannot be instantly transferred to the slave drive means due to their inertia to thereby temporarily unstabilize the slave drive means. Stated otherwith, when connecting more than one spindle motor (practically eight or nine spindle motors) in parallel to each other, the temporary defect of master spindle motor may affect all of the slave spindle motors.

Further, since each rotating disc is formed with a single index point per one complete rotation thereof, fine synchronization control is difficult among a plurality of spindle motors.

### SUMMARY OF THE INVENTION

An object of the present invention is to, therefore, stably drive a plurality of spindle motors in synchronization with each other.

Another object of the present invention is to drive individual spindle motors in synchronization with a common external synchronizing or standard signal so as to eliminate the drawback of conventional synchronization system even when a greater number of spindle motors are driven in parallel to each other.

Further object of the present invention is to prevent a temporary defect of one spindle motor from affecting all of the other spindle motors during the synchronizing operation thereof by utilizing an common external synchronizing signal.

Still further object of the present invention is to carry out coarse synchronization control based on an index point formed on each rotating disc per one complete rotation and subsequently carry out fine synchronization control based on bit points formed on each rotating disc.

According to the present invention, in an individual recording device having a spindle motor for rotating a recording disc medium, the spindle motor control circuit for controlling the spindle motor is provided with a phase comparison circuit for phase-comparing a train of pulses generated in response to successive detection of reference points pre-recorded on the disc medium with a synchronizing signal externally inputted outside of the control circuit so as to output a phase error signal effective to control the rotation speed of spindle motor.

By such construction, the individual spindle motor can be driven in phase-synchronization with the standard synchronizing signal at high accuracy.

### BRIEF DESCRIPTION OF THE DRAWINGS

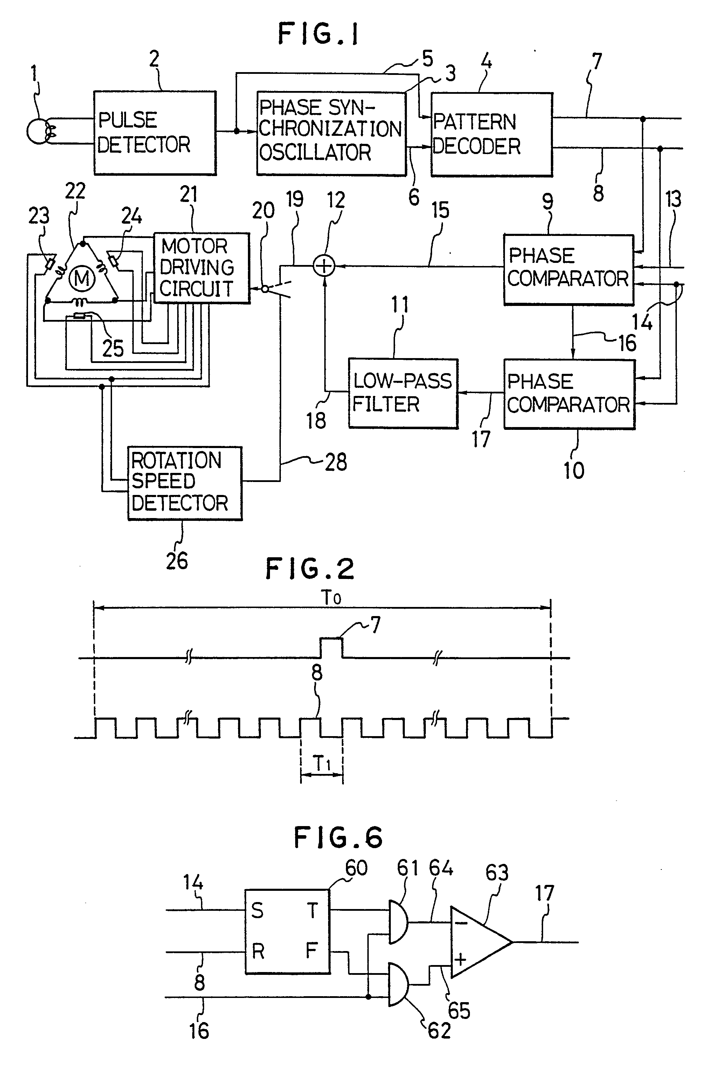

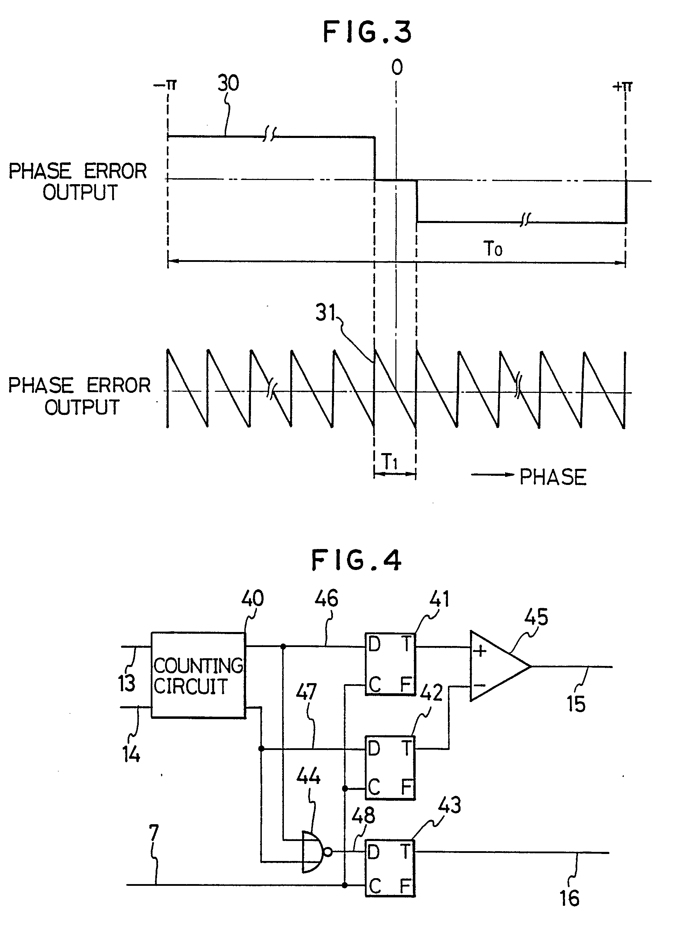

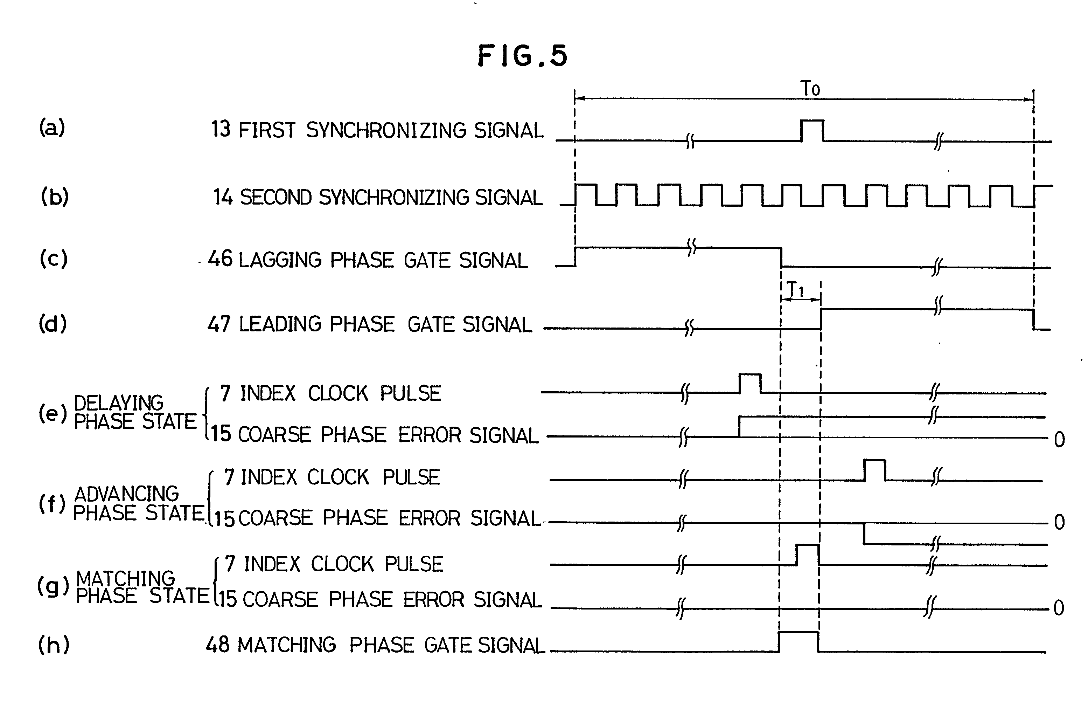

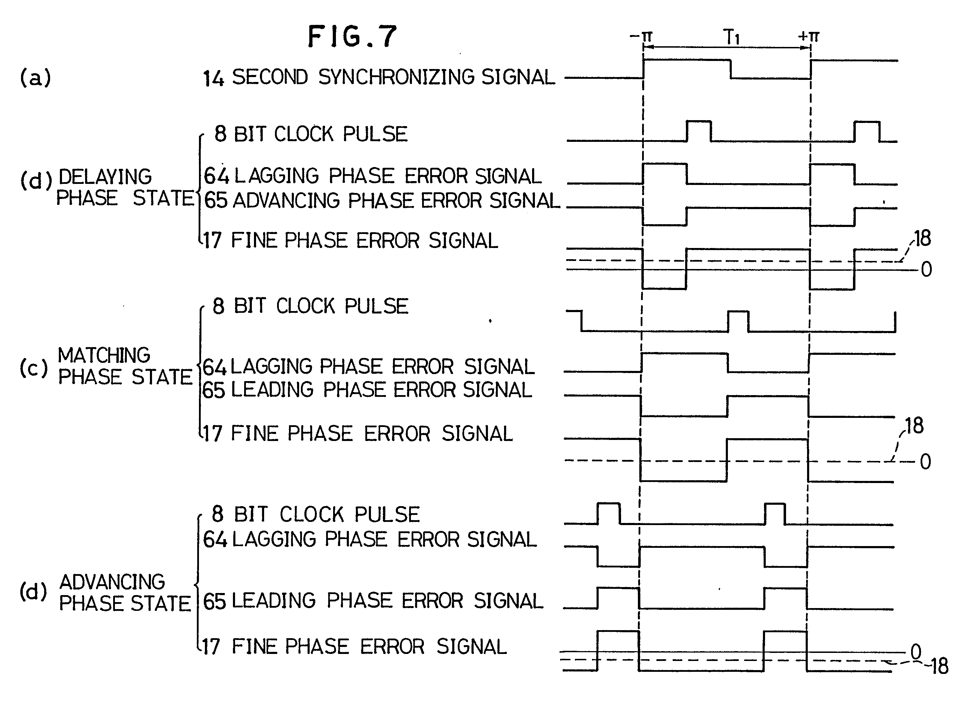

Fig. 1 is a circuit block diagram showing one embodiment of the spindle motor control circuit according to the present invention; Fig. 2 shows waveforms of clock signals produced according to clock data pre-recorded on a recording disc medium; Fig. 3 shows characteristics of phase comparison circuit used in the present invention; Fig. 4 is a detailed circuit block diagram of a first phase comparator shown in Fig. 1; Fig. 5 shows various signal waveforms illustrative of operation of the first phase comparator; Fig. 6 is a detailed circuit block diagram of a second phase comparator shown in Fig. 1; and Fig. 7 shows various signal waveforms illustrative of operation of the second phase comparator.

DESCRIPTION OF THE PREFERRED EMBODIMENTS

Hereinafter, embodiments of the present invention will be explained in detail in conjunction with the drawings.

Referring to Fig. 1, which is a circuit block diagram of one embodiment of the spindle motor control circuit according to the present invention, the circuit is comprised of a magnetic head 1, a pulse detector 2, a phase-synchronizing oscillator 3, a pattern decoder 4 which receives an output detection signal 5 from the pulse detector 2 and clock pulses 6 from the phase-synchronizing oscillator 3, and which produces index clock pulses 7 and bit clock pulses 8. A first phase comparator 9 is connected to receive the index clock pulses 7 and first and second standard pulses or synchronizing signals 13 and 14 from an external pulse source (not shown), and a second phase comparator 10 is connected to receive the bit clock pulses 8, the second external synchronizing signal 14, and a phase-matching confirming signal 16 from the first phase comparator 9. The control circuit further includes a low-pass filter 11 receptive of a fine phase error signal 17 outputted from the second phase comparator 10, and an adder 12 receptive of an output signal 18 from the low-pass filter 11 and a coarse phase error signal 15 outputted from the first phase comparator 9 for producing a composite phase error signal 19. The control circuit still further includes a switch 20, a motor driving circuit 21, a spindle motor 22 for rotating a recording disc medium (not shown), a plurality of rotation detecting elements 23-25, and a rotation speed detecting circuit 26 receptive of a synchronization detection signal 27 for outputting a rotation speed error signal 28.

The first and second phase comparators 9 and 10 consitute a phase comparison circuit operative to phase-compare the train of clock pulses produced in response to successive detection of clock data pre-recorded on the disc medium with the train of standard pulses inputted from the external pulse source outside the control circuit so as to produce the phase error signals effective to control the rotation speed of spindle motor 22.

Fig. 2 shows waveforms of signals produced according to the clock data pre-recorded on the disc medium. The same reference numerals indicate the same signals as in Fig. 1, and $T_0$ represents a period of rotation of the spindle motor in Fig. 2.

Fig. 3 shows operative characteristics of the phase comparators utilized in the present invention, in which a level 30 illustrates input-output characteristic of the first phase comparator 9, and another level 31 illustrates input-output characteristic of the second phase comparator 10. The reference $T_0$ indicates the period of spindle motor rotation and $T_1$ indicates a time slot about zero radian determined when the rotation period $T_0$ is represented in terms of $-\pi$ duration through $+\pi$ radian.

Fig. 4 shows a detailed circuit structure of the first phase comparator 9 shown in Fig. 1. The same reference numerals in Fig. 4 indicate the same parts or same signals as in Fig. 1. The first phase comparator 9 is comprised of a counting circuit 40, a flip-flop circuit 41 receptive of a lagging phase gate signal 46, another flip-flop circuit 42 receptive of a leading phase gate signal 47, further flip-flop circuit 43 receptive of a matching phase gate signal 48, a NOR circuit 44, and a differential amplifier 45.

Fig. 5 shows various signal waveforms illustrative of operation of the first phase comparator 9, in which waveform (a) represents the first external synchronizing signal 13, waveform (b) represents the second external synchronizing signal 14, waveform (c) represents the lagging phase gate signal 46, waveform (d) represents the leading phase gate signal 47, waveforms (e) represent the index clock pulse 7 and the coarse phase error signal 15 under delaying phase state, waveforms (f) represent the index clock pulse 7 and the coarse phase error signal 15 under advancing phase state, waveforms (g) represent the index clock pulse 7 and the coarse phase error signal 15 under matching phase state, and waveform (h) represents the matching phase gate signal 48.

Fig. 6 shows detailed circuit structure of the second phase comparator 10 shown in Fig. 1, in which the same reference numerals indicate the same parts and signals as in Fig. 1. The second phase comparator 10 is comprised of a flip-flop circuit 60 of the edge triggering type, a pair of AND circuits 61 and 62, and a differential amplifier 63 receptive of lagging phase error signal 64 and leading phase error signal 65.

Fig. 7 shows various signal waveforms illustrative of operation of the second phase comparator 10, in which waveform (a) represents the second external synchronizing signal 14, waveforms (b) represent the bit clock pulses 8, the pair of lagging and leading phase error signals 64 and 65 and the fine phase error signal 17 under delaying phase state, waveforms (c) represent the bit clock pulses 8, the pair of lagging and leading phase error signals 64 and 65 and the fine phase error signal 17 under matching phase state, waveforms (d) represent the bit clock pulses 8, the pair of lagging and leading phase error signals 64 and 65 and the fine phase error signal 17 under advancing phase state, and the dushed waveform represents the output signal 18 from the low-pass filter 11 which is a leveled signal of the fine phase error signal 17.

Next, the operation of embodiment shown in Fig. 1 will be explained with reference to Figs. 2-7. Firstly, when a power supply voltage is applied to the device, the switch 20 is set to select the rotation speed error signal 28 for the motor driving circuit 21 such that the motor driving circuit 21 operates while switching a phased current to increase the rotation speed of spindle motor 22 according to output detection signals from the rotation detecting elements 23-25. Then, the rotation speed detection circuit 26 operates according to the rotation detection signal 27 to control the motor driving circuit 21 through the rotation speed error signal 28 so as to maintain the spindle motor 22 at the steady rotation speed. The motor driving circuit 21 operates according to the rotation speed error signal inputted thereinto to regulate a motor driving current so as to control the rotation speed of spindle motor. The above-described motor driving and controlling circuits may be composed of generally used DC brushless motor control circuit.

After passing of a predetermined time interval long enough for the spindle motor 22 to reach the steady rotational speed from the start of application of the power supply voltage, the switch 20 is switched to receive the composite phase error signal 19 by a timer. The switch 20 may be composed of an electronic switch.

The magnetic head 1 successively reproduces the clock data pre-recorded along a clock truck of the recording disc medium in the form of bit patterns, and the pulse detecter 2 converts the reproduced clock data into a train of detection pulses 5. Then, the phase synchronization oscillator 3 receives the detection pulses 5 from the pulse detecter 2 and produces a train of the clock pulses 6 in synchronization with the detection pulses 5. The pattern decoder 4 receives concurrently the detection pulses 5 from the pulse detecter 2 and the clock pulses 6 from the phase synchronization oscillator 3, and produces the index clock pulses 7 and the bit clock pulses 8. The waveforms of these pulses 7 and 8 are illustrated in Fig. 2. As shown, the index clock pulse 7 is produced by the pattern decoder 4 which can decode the bit patterns pre-recorded along the clock truck through the train of detection pulses to detect a specific bit pattern. The specific bit pattern is pre-recorded at one location through the clock truck of one rotation in the form of, for example, a magnetic bit pattern magnetically reverse to all of the other bit patterns. Therfore, the index clcck pulse 7 is produced once each rotation period $T_0$ of the recording disc medium. On the other hand, the bit clock pulses 8 are produced successively on bit-by-bit basis during each rotation of the disc medium.

The first phase comparator 9 which has input-output characteristic as shown in the logic level 30 of Fig. 3 operates to compare the phases of index clock pulse 7 and the first standard pulse or first synchronizing signal 13 with each other so as to output the coarse phase error signal 15. As shown in Fig. 3 by the logic level 30 indicative of the input-output characteristic, the first phase comparator 9 produces the coarse phase error signal 15 held at zero voltage when the index clock pulse 7 falls within the time slot $T_1$ positioned around zero radian defined when the rotation period $T_0$ is represented in terms of $-\pi$ radian through $+\pi$ radian. This means that the phase difference of index clock pulse 7 from the first standard pulse 13 is smaller than $\pm \pi \times T_1/T_0$ radian. On the other hand, when the phase of index clock pulse 7 is delayed or advanced over $\pm \pi T_1/T_0$ radian with respect to the first standard pulse 13, the first phase comparator 9 produces the coarse phase error signal 15 held at either of the opposit voltages according to the amount of phase difference. Such characteristic of the first phase comparator 9 can be achieved by the circuit construction shown in Fig. 4 with utilizing the first and second standard pulses 13 and 14.

Next, the operation of first phase comparator 9 will be explained in detail with reference to Figs. 4 and 5. The first synchronizing signal 13 is composed of a single standard pulse occurring once each rotation period of the motor and being used as a reference pulse phase-compared with the index clock pulse 7. The second synchronizing signal 14 is comprised of a train of second standard pulses within each rotation period. These first and second synchronizing signals 13 and 14 are supplied from an external signal source outside the spindle motor control circuit as rotation speed regulating signals.

Referring to Fig. 4, the counting circuit 40 receptive of the first and second synchronizing signals 13 and 14 produces the lagging phase gate signal 46 and leading phase gate signal 47 at timings illustrated in Fig. 5. These lagging and leading phase gate signals 46 and 47 are inputted into the flip-flop circuits 41 and 42, respectively, which are triggered by the index clock pulse 7. Namely, the phase of index clock pulse 7 is compared with that of the first standard pulse 13, and the differential amplifier 45 operates according to the phase state of index clock pulse 7 to output the coarse phase error signal 15 which has zero voltage level when the index clock pulse 7 coarsely phase-matches with the first standard pulse 13, positive voltage level when the index clock pulse 7 phase-delays from the first standard pulse 13, or negative voltage level when the index clock pulse 7 phase-advances to the first standard pulse 13. The waveforms of coarse phase error signal 15 under various phase states are shown in Fig. 5.

Further, when the index clock pulse 7 coincides with the matching-phase gate signal 48 which is produced in the NOR circuit 44, the flip-flop circuit 43 is set to output the phase-matching confirmation signal 16. When the index clock pulse 7 does not coincide with the matching-phase gate signal 48, the flip-flop circuit 43 is reset.

On the other hand, the second phase comparator 10 phase-compares the bit clock pulses 8 with the second standard pulses 14. The second phase comparator 10 has the input-output characteristic as shown by the logic level 31 in Fig. 3 and is comprised of the circuit structure of Fig. 6.

The edge trigger type flip-flop circuit 60 receptive of the second standard pulses 14 and the bit clock pulses 8 is set by the second standard pulses 14 and reset by the bit clock pulses 8. Then, the edge trigger type flip-flop circuit 60 outputs a pulse having 50% duty of duration only when the phase of bit clock pulse 8 completely matches with that of the second standard pulse 14. Since this output pulse is gated by the pair of AND circuits 61 and 62 in response to the phase-matching confirming signal 16, the operational amplifier 63 outputs the fine phase error signal 17 only when the first phase comparator 9 detects the synchronization between the index clock pulse 7 and the first standard pulse 13. The fine phase error signal 17 has different duty ratios of pulse duration according to the phase relation between the bit clock pulses 8 and the second standard pulses 14 as illustrated in Fig. 7. The low-pass filter 11 receives the fine phase error signal 17 to level the same, and outputs the leveled fine phase error signal 18 which has a voltage level corresponding to the mean voltage value of fine phase error signal 17.

Next, the adder 12 adds the coarse phase error signal 15 fed from the first phase comparator 9 to the leveled fine phase error signal 18 which is outputted from the low-pass filter 11 and the level of which corresponds to the mean voltage value of fine phase error signal 17 fed from the second phase comparator 10. When the first phase comparator 9 does not detect the phase matching between the index clock pulse 7 and the first standard pulse 13, the phase-matching confirming signal 16 is held inactive to the second phase comparator 10 such that the second phase comparator 10 stops outputting the fine phase error signal 17 so that the adder 12 outputs the composite phase error signal 19 which contains only the coarse phase error signal 15. At this time, if the index clock pulse 7 phase-delays from the first standard pulse 13, the composite phase error signal 19 is held at positive level effective to increase the driving current of spindle motor 22 by means of the motor driving circuit 21 to increase the rotation speed of motor to thereby coarsely compensate the phase delay. On the other hand, if the index clock pulse 7 phase-advances to the first standard pulse 13, the composite phase error signal 19 is held at negative level so as to compensate the advancing phase.

Finally, when the index clock pulse 7 is coarsely matched to the first standard pulse 13 within the range of time slot $T_1$, the adder 12 outputs the composite phase error signal 19 which contains only the leveled fine phase error signal 18 which has the voltage level corresponding to the mean voltage value of fine phase error signal 17 outputted from the second phase comparator 10. At this time, if the bit clock pulse 8 phase-delays from the second standard pulse 14 within the range corresponding to the time slot $T_1$, the composite phase error signal 19 is held positive to increase the driving current of spindle motor 22 by means of the motor driving circuit 21 to increase the rotation speed thereof to thereby finely compensate the phase delay. On the other hand, if the phase of bit clock pulses 8 advances to that of the second standard pulses 14, the composite phase error signal 19 is held negative so as to compensate the advancing-phase.

The above-described operation procedure is summarized as follows: 1. After the application of power supply voltage, the spindle motor is normally operated to reach the steady rotation speed. 2. After a predetermined time interval, the spindle motor is switched to the phase-synchronizing operation. 3. During the phase-synchronizing operation, the spindle motor is synchronized with the first standard pulse which occurs once each rotation of the motor to thereby carry out the coarse phase matching within the phase range of $\pm \pi \times T_1/T_0$ radian. 4. Then, the spindle motor is synchronized with the second standard pulses on bit-by-bit basis to carry out the fine phase matching to thereby establish the perfect phase synchronization.

By such operation, the spindle motor control circuit obtains the phase data of rotation from the recording disc medium on which information is recorded so as to carry out the highly accurate phase synchronization.

Further, since the reproducing system of clock data and the driving circuit for the period until the spindle motor reachs the steady rotation speed are generally equipped in the conventional apparatus, there is needed a new element to be added in order to carry out the operation of device, reducing the cost.

As described above, according to the present invention, since individual spindle motors can be rotated in synchronization with the common standard synchronizing signal at high accuracy, a plurality of disc recording devices can be driven in parallel to and in synchronization with each other so as to constitute a single recording device having great recording capacity.

## Claims

1. A control circuit for controlling a spindle motor used to rotate a recording disc medium prerecorded thereon with clock data indicative of angular position thereof, characterized by: detecting means operative during the rotation of recording disc medium for detecting the clock data and producing successively clock pulses in response to detection of the clock data; comparing means for comparing phases of the clock pulses with that of external standard pulses inputted from a standard pulse source outside the control circuit to produce phase error signals indicative of phase differences between the clock pulses and the standard pulses; and controlling means for controlling rotation speed of the spindle motor according to the phase error signal to thereby synchronize the clock pulses to the standard pulses.

2. A control circuit as claimed in claim 1, characterized in that the said clock data is an index clock pulse occuring once each ratation of the recording disc medium.

3. A control circuit as claimed in claim 1 or 2, characterized in that the detecting means includes a pattern decoder for decoding the clock data to produce index clock pulses occurring once each rotation of the recording disc medium and being used for coarse synchronization, and to produce bit clock pulses occurring on bit-by-bit basis and being used for fine synchronization.

4. A control circuit as claimed in claim 3, characterized in that the comparing means includes a first phase comparator for comparing the phase of index clock pulses with that of first standard pulses set to occur once each rotation of the recording disc medium to thereby produce a coarse phase error signal effective to coarsely control the rotation of spindle motor, and a second phase comparator for comparing the phase of bit clock pulses with that of second standard pulses set to occur periodically on the bit-by-bit basis to produce a fine phase error signal effective to finely control the rotation of spindle motor.

5. A control circuit as claimed in claim 4, characterized in that the first phase comparator includes means operative when the phase of index clock pulses matches with that of the first standard pulses to produce a phase-matching confirming signal effectire to activate the second phase comparator.

6. A control circuit as claimed in claim 4 or 5, characterized in that the comparing means includes a low-pass filter for leveling the fine phase error signal for direct use in the controlling means.

EP 0 332 099 A2

# FIG.1

# FIG.2

# FIG.6

# FIG.3

# FIG.4

# FIG.5

(a)  13 FIRST SYNCHRONIZING SIGNAL

(b)  14 SECOND SYNCHRONIZING SIGNAL

(c)  46 LAGGING PHASE GATE SIGNAL

(d)  47 LEADING PHASE GATE SIGNAL

(e) DELAYING PHASE STATE { 7 INDEX CLOCK PULSE / 15 COARSE PHASE ERROR SIGNAL

(f) ADVANCING PHASE STATE { 7 INDEX CLOCK PULSE / 15 COARSE PHASE ERROR SIGNAL

(g) MATCHING PHASE STATE { 7 INDEX CLOCK PULSE / 15 COARSE PHASE ERROR SIGNAL

(h)  48 MATCHING PHASE GATE SIGNAL

EP 0 332 099 A2

# FIG.7

(a)      14 SECOND SYNCHRONIZING SIGNAL

(d) DELAYING PHASE STATE
- 8 BIT CLOCK PULSE
- 64 LAGGING PHASE ERROR SIGNAL
- 65 ADVANCING PHASE ERROR SIGNAL
- 17 FINE PHASE ERROR SIGNAL

(c) MATCHING PHASE STATE
- 8 BIT CLOCK PULSE
- 64 LAGGING PHASE ERROR SIGNAL
- 65 LEADING PHASE ERROR SIGNAL
- 17 FINE PHASE ERROR SIGNAL

(d) ADVANCING PHASE STATE
- 8 BIT CLOCK PULSE
- 64 LAGGING PHASE ERROR SIGNAL
- 65 LEADING PHASE ERROR SIGNAL
- 17 FINE PHASE ERROR SIGNAL

EP 0 332 099 A2